(19) **Europäisches Patentamt**

**European Patent Office**

**Office européen des brevets**

(11) **EP 0 940 952 B1**

(12) **EUROPÄISCHE PATENTSCHRIFT**

(45) Veröffentlichungstag und Bekanntmachung des Hinweises auf die Patenterteilung:
**07.12.2005 Patentblatt 2005/49**

(51) Int Cl.$^7$: **H04L 12/56**

(21) Anmeldenummer: **99101306.1**

(22) Anmeldetag: **25.01.1999**

(54) **Verfahren und Gerät zur Herstellung einer Kommunikationsverbindung**

Method and device for establishing a communication link

Méthode et appareil pour établir une liaison de communication

(84) Benannte Vertragsstaaten:
**AT CH DE ES FR GB IT LI**

(30) Priorität: **06.03.1998 DE 19809593**

(43) Veröffentlichungstag der Anmeldung:
**08.09.1999 Patentblatt 1999/36**

(73) Patentinhaber: **Tenovis GmbH & Co. KG 60362 Frankfurt am Main (DE)**

(72) Erfinder:
• **Roessler, Georg 60528 Frankfurt (DE)**
• **Bodamer, Stefan 75378 Bad Liebenzell (DE)**
• **Renger, Thomas 70195 Stuttgart (DE)**

(74) Vertreter: **Walkenhorst, Andreas et al Tergau & Pohl Patentanwälte Eschersheimer Landstrasse 105-107 60322 Frankfurt am Main (DE)**

(56) Entgegenhaltungen:
**EP-A- 0 756 403**

• **JACOBSEN S B E ET AL: "LOAD CONTROL IN ATM NETWORKS" INNOVATIONS IN SWITCHING TECHNOLOGY. STOCKHOLM, MAY 28 - JUNE 1, 1990, PROCEEDINGS OF THE INTERNATIONAL SWITCHING SYMPOSIUM. (ISS), NEW YORK, IEEE, US, Bd. 5 SYMP. 13, 28. Mai 1990 (1990-05-28), Seiten 131-138, XP000130937**
• **LINDBERGER K: "DIMENSIONING AND DESIGN METHODS FOR INTEGRATED ATM NETWORKS" FUNDAMENTAL ROLE OF TELETRAFFIC IN THE EVOLUTION OF TELECOMMUNICATIONSNETWORKS. PROCEEDINGS OF THE 14TH. INTERNATIONAL TELETRAFFIC CONGRESS - ITC 14, JUAN-LEES-PINS, JUNE 6 - 10, 1994, TELETRAFFIC SCIENCE AND ENGINEERING, AMSTERDAM, ELSEVIER, NL, Bd. 1B, 6. Juni 1994 (1994-06-06), Seiten 897-906, XP000593341 ISBN: 0-444-82031-0**

## Beschreibung

Die Erfindung betrifft ein Verfahren zur Herstellung einer Kommunikationsverbindung zur Übertragung digitaler Signale mit potentiell variablen Übertragungsraten in einem Kommunikationsnetz, bei dem von einem Netzknoten mit einem Übertragungswunsch Verkehrsparameter, einschließlich der mittleren Bitrate und der Spitzenbitrate, übermittelt werden und von einem anderen Netzknoten anhand der übermittelten Parameter eine Annahmeprüfung dahingehend vorgenommen wird, ob im Hinblick auf die eigene Übertragungskapazität die Verbindung mit einer hohen Wahrscheinlichkeit für eine verlustfreie Übertragung aller Informationen hergestellt werden kann.

Die Erfindung betrifft ferner ein Gerät zum Empfang einer Mehrzahl digitaler Signale mit potentiell variablen Übertragungsraten, für die zur Herstellung der Verbindung zunächst ein Übertragungswunsch und Verkehrsparameter, einschließlich der mittleren Bitrate und der Spitzenbitrate, übermittelt werden, mit einer Einrichtung zur Durchführung einer Annahmeprüfung durch Vergleich der eigenen Übertragungskapazität mit dem durch bestehende Verbindungen zuzüglich des Übertragungswunsches beanspruchten Bandbreiten.

Zur Herstellung einer Kommunikationsverbindung, insbesondere in ATM (asynchronous transfer mode) muß der empfangende Netzknoten prüfen, ob die von zur Aussendung vorgesehene Übertragung von dem Netzknoten kapazitätsmäßig verkraftet wird. Hierzu muß in dem Netzknoten abgeschätzt werden, ob die Übertragung des digitalen Signals mit einer vorgegebenen geringen Zellverlustwahrscheinlichkeit (z.B. $10^{-9}$) empfangen werden kann. Da die Sendestationen regelmäßig nicht ständig mit einer maximalen Bandbreite übertragen, ist es für die Überprüfung der Verbindungsannahme üblich, aus den beim Verbindungsaufbau signalisierten Verkehrsparametern eine effektive Bandbreite zu berechnen. Die effektive Bandbreite liegt immer zwischen der mittleren Bandbreite und der maximalen Bandbreite einer Verbindung. Solange die Summe der effektiven Bandbreiten aller Verbindungen einschließlich der neu eintreffenden unterhalb der nominalen Bedienrate des Netzknotens (nominale Linkrate) liegt, kann die neue Verbindung angenommen werden, andernfalls wird sie abgelehnt.

Da die Summe der maximalen Bandbreiten aller Verbindungen größer sein kann als die Linkrate, spricht man vom statistischen Multiplexen.

Da die Entscheidung über die Verbindungsannahme in Echtzeit erfolgen muß, sind Algorithmen vorgeschlagen worden, bei denen der Berechnungsaufwand viel kleiner als bei einer exakten Berechnung ist. Ein solcher Algorithmus soll die erreichbare Auslastung des Netzknotens möglichst gut gegenüber der exakten Berechnung annähern, sie jedoch nie überschreiten, weil dies eine Verletzung der Dienstgüte verursachen würde.

In der EP 07 564 03 A2 wird ein Verfahren offenbart, bei dem für jede Verbindung eine effektive Bandbreite bestimmt wird, wobei durch statistisches Multiplexen aller Verbindungen eine Gesamtbandbreite ermittelt wird, die bei der Annahmeprüfung mit der zur Verfügung stehenden Bandbreite verglichen wird. Der Nachteil der in dieser Druckschrift vorgeschlagenen Näherung besteht darin, daß die tatsächlich auftretende Bandbreite bei heterogenem Verkehr oftmals unterschätzt wird, was einen erhöhten Zellverlust bedeuten kann, während die Bandbreite an anderer Stelle überschätzt wird, wodurch nicht die gesamte zur Verfügung stehende Bandbreite ausgenutzt wird.

In dem Beitrag "Load Control in ATM Networks" von Jacobsen et al., erschienen im Rahmen des International Switching Symposium 1990 "Innovations in Switching Technology", werden verschiedene Verfahren zur Berechnung der Zellverlustwahrscheinlichkeit auf einer ATM-Leitung untersucht. Diese Zellverlustwahrscheinlichkeit soll als Kriterium bei der Annahmeprüfung einer neuen Verbindung herangezogen werden.

Ein bekannter Algorithmus ist von Lindberger ("Dimensioning and design methods for integrated ATM networks", Proceedings of the 14th ITC, Juni 1994, Seiten 897-906) vorgeschlagen worden.

Bei homogenem Verkehr, also Verbindungen mit gleichen Bitraten, sind die bekannten Algorithmen auf der Basis der effektiven Bandbreite sehr erfolgreich. Sie erfassen auch den nichtlinearen Zusammenhang zwischen der Linkrate und der Anzahl der Verbindungen. In der Regel können nämlich bei einer Verdopplung der Linkrate mehr als doppelt so viele Verbindungen angenommen werden, weil bei zunehmender Anzahl von Verbindungen die Wahrscheinlichkeit abnimmt, daß alle gleichzeitig mit maximaler Rate senden, so daß die Gefahr eines Zellverlusts bei gleicher relativer Auslastung sinkt.

Bei einem heterogenen Verkehr mit potentiell stark unterschiedlichen maximalen und mittleren Bitraten tritt dagegen das Problem auf, daß statistisches Multiplexen zwischen Verbindungen mit sehr unterschiedlichen Verkehrsparametern weniger gut funktioniert. Die Annahmekurve, also die Grenzkurve für die Annahme von Verbindungen, ist bei unterschiedlichen Verkehrsparametern nicht linear sondern konkav. Bei der linearen Approximation, wie sie durch die bekannten Algorithmen vorgenommen wird, würden somit Verbindungen angenommen werden, die eine Verletzung der Dienstgüte verursachen würden.

Für einen heterogenen Verkehr stehen somit keine optimierten Algorithmen zur Verfügung, die eine Echtzeit-Entscheidung über die Annahme der Verbindung ermöglichen, eine Verletzung der Dienstgüte praktisch ausschließen und dennoch eine gute Annäherung an die exakte Berechnung der möglichen Auslastung der Empfangsstation zur Verfügung stellen.

Die vorliegende Erfindung geht daher von der Problemstellung aus, bezüglich der genannten Anforderungen

EP 0 940 952 B1

Verbesserungen herbeizuführen.

Ausgehend von dieser Problemstellung ist erfindungsgemäß ein Verfahren der eingangs erwähnten Art dadurch gekennzeichnet, daß in dem Netzknoten für die Annahmeprüfung eines Übertragungswunsches eine Klassifizierung des Übertragungsverkehrs der Empfangsstation bezüglich vorgegebener Kombinationen der Parameter "mittlere Bitrate" und "Spitzenbitrate" vorgenommen wird, daß für die Annahmeprüfung eine effektive Bandbreite durch Anwendung eines für einen homogenen Verkehr bekannten Algorithmus für ein statistisches Multiplexen unter Berücksichtigung einer reduzierten Übertragungskapazität zugrundegelegt wird und daß die so für die gebildeten Klassen als benötigt ermittelten effektiven Bandbreiten im wesentlichen additiv ohne statistisches Multiplexen berücksichtigt werden.

Zur Lösung des genannten Problems ist ferner ein Gerät der eingangs erwähnten Art mit einer die genannte Klassifizierung und Auswertung vornehmenden Einrichtung zur Durchführung der Annahmeprüfung ausgestattet.

Die vorliegende Erfindung beruht darauf, daß zur Berechnung der effektiven Bandbreite der durch die Parameter "mittlere Bitrate" und "Spitzenbitrate", vorzugsweise "mittlere Bitrate" und "Verhältnis von Spitzenbitrate zu mittlerer Bitrate", gebildete Parameterraum für die Verbindungen in Klassen (Regionen) unterteilt wird. Für die Berechnung der effektiven Bandbreite einer Verbindung wird angenommen, daß innerhalb einer Klasse statistisches Multiplexen so gut funktioniert wie bei homogenem Verkehr, weil die Verbindungen relativ ähnliche Verkehrsparameter haben. Zwischen Verbindungen aus verschiedenen Klassen wird hingegen keinerlei Gewinn durch statistisches Multiplexen unterstellt.

Treten bei der Herstellung der Kommunikationsverbindungen häufig Verbindungen mit einer konstanten Bitrate auf, ist es besonders zweckmäßig, diese Verbindungen einer eigenen Klasse zuzuordnen, die in gleicher Weise wie die anderen gebildeten Klassen, also als Spezialfall einer Klasse mit einer variablen Bitrate, behandelt wird.

Die Partitionierung der Verbindungen mit variabler Bitrate in die verschiedenen Klassen erfolgt ausschließlich für die Berechnung der effektiven Bandbreite. Das bedeutet, daß die Anteile der einzelnen Klassen an der gesamten Kapazität (Linkrate) der Empfangsstation völlig flexibel sind und daß eine neue Verbindung weiterhin nur dann abgelehnt wird, wenn die Summe aller effektiven Bandbreiten größer als die Linkrate würde.

Für die mathematische Berechnung wird die Übertragungskapazität des Netzknotens als Bedienrate C und die Zellverlustwahrscheinlichkeit B berücksichtigt. Für die Zellverlustrate wird eine Zielgrenze B formuliert.

Das Konzept der effektiven Bandbreiten-Übertragungsraten sieht vor, daß die effektiven Bandbreiten $c_i$ für jede Verbindung berechnet werden, so daß die Verbindung angenommen werden kann, solange gilt

$$\sum_i c_i \leq C$$

Die Schwierigkeit besteht nun darin, einen Ausdruck für die effektive Bandbreite zu ermitteln. Bei einem homogenen Betrieb ist die größte Anzahl von Verbindungen N aufzufinden, für die die Zellverlustwahrscheinlichkeit noch unter B liegt. Die effektive Bandbreite ergibt sich dann zu c = C/N.

Der Lindberger Algorithmus stellt eine einfache Formel zur Berechnung der effektiven Bandbreite dar, die sich auf die verkehrsparameter m (mittlere Bitrate) und h (Spitzenbitrate), sowie auf die Bedienrate C und die Zielgröße B für die Zellverlustwahrscheinlichkeit stützt:

$$c = \begin{cases} a \cdot m \cdot \left(1 + 3 \cdot z \cdot \left(1 - \frac{m}{h}\right)\right), & z \leq \min(1, h/3m) \\ a \cdot m \cdot \left(1 + 3 \cdot z^2 \cdot \left(1 - \frac{m}{h}\right)\right), & 1 \leq z^2 \leq h/3m \\ a \cdot h, & \text{sonst} \end{cases}$$

mit $a = 1 - \frac{\log \hat{B}}{50}$ und $z = \frac{-2 \cdot \log \hat{B}}{C/h}$

Die Lindberger Approximation ist jedenfalls für große Werte von C/h sehr gut. Sie berücksichtigt ferner den durch das statistische Multiplexen erzielbaren Gewinn, der mit der Bedienrate C ansteigt.

Für die Akzeptanzgrenze wird eine lineare Approximation vorgenommen, die unterstellt, daß die effektiven Bandbreiten unabhängig von heterogenen Verkehrsbedingungen sind. Es hat sich jedoch gezeigt, daß für starke Abweichungen, insbesondere hohe Spitzenbitraten im Verhältnis zur mittleren Bitrate, erhebliche Abweichungen von der linearen Approximation auftreten, so daß die lineare Approximation die Zellverlustwahrscheinlichkeit in nicht zu vernachlässigender Weise unterschätzt. Dies gilt insbesondere bei einem Mix von Verbindungen mit konstanter Bitrate und den genannten Verbindungen mit variabler Bitrate.

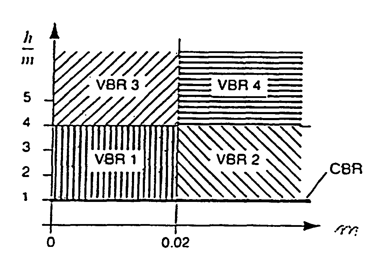

Gemäß der schematischen und beispielhaften Darstellung in Figur 1 werden die Verbindungen mit variabler Bitrate (VBR-Verbindungen) in Klassen unterteilt, die sich als Regionen VBR 1, VBR 2, VBR 3, VBR 4 des hier durch die mittlere Bitrate m und das Verhältnis von Spitzenbitrate h zu mittlerer Bitrate m auf gespannten Parameterraum ergeben. Darüber hinaus werden die Verbindungen mit konstanter Bitrate CBR gesondert berücksichtigt.

Die oben beschriebene lineare Approximationsmethode wird auf die Verbindungen innerhalb der einzelnen Klassen angewendet. Wenn andererseits zwei Verbindungen in verschiedenen Klassen i und j liegen, wird eine reduzierte Bedienrate $C_{red,i}$ als Parameter für die effektive Bandbreitenformel für Verbindungen in der Klasse i angesetzt:

$$C_{red,i} = C - C_{CBR} - \sum_{\substack{k=1 \\ k \neq i}}^{K} C_{VBR,k}$$

Die Bedienrate wird somit durch die Summe der CBR-Bandbreiten $C_{CBR}$ und durch summierte effektive Bandbreiten der anderern VBR-Klassen vermindert.

Ferner wird auch eine Korrektur der Zielgröße B für die Zellverlustwahrscheinlichkeit wie folgt vorgenommen:

$$\hat{B}_i^* = \hat{B} \cdot \frac{\sum_k M_{VBR,k} + M_{CBR}}{M_{VBR,i}}$$

wobei $M_{VBR}$ die Summe der mittleren Bitrate der VBR-Verbindungen in einer Klasse und $M_{CBR}$ die mittlere Bitrate für CBR-Verbindungen angeben.

Ein alternativer Ansatz für die Berechnung der reduzierten Dienstrate kann lauten:

$$C_{red,i} = C - C_{CBR} - \sum_{\substack{k=1 \\ k \neq i}}^{K} M_{VBR,k}$$

Im folgenden soll der erstgenannte Ansatz für die verminderte Dienstrate betrachtet werden. In der Empfangsstation müssen die Variablen $C_{CBR}$, $M_{CBR}$, $C_{VBR,k}$ und $M_{VBR,k}$ (k = 1, ... , K; K ist die Anzahl der Klassen) bekannt sein bzw. ermittelt werden. Beim Empfang eines Übertragungswunsches für eine VBR-Verbindung mit den Parametern $m_{neu}$ und $h_{neu}$ werden folgende Verfahrensschritte ausgeführt:

1. Bestimmung der Klasse $k_{neu}$ für die neue Verbindung durch Auswertung von $m_{neu}$ und $h_{neu}$.

2. Berechnung der reduzierten Dienstrate $C_{red,k_{neu}}$ für die Klasse $k_{neu}$ gemäß der angegebenen Gleichung.

3. Errechnung von $\hat{B}_{k_{neu}}^*$.

4. Berechnung der effektiven Bandbreite $c_{neu} = c\,(m_{neu}, h_{neu}, C_{red,k_{neu}}, \hat{B}_{k_{neu}}^*)$ mit der Lindberger-Formel.

5. Wenn

$$c_{neu} + C_{CBR} + \sum_{k} C_{VBR,k} \leq C,$$

Verbindung annehmen, andernfalls ablehnen.

6. Wenn die Verbindung angenommen werden kann, aktualisieren von $C_{VBR,k}$ und $M_{VBR,k}$ ($k = 1, \ldots , K$).

Die Aktualisierung gemäß Schritt 6 ist auch erforderlich, um die Auswirkungen für die Verbindungen in anderern Klassen zu berücksichtigen. Wenn in einer anderen Klasse eine Verbindung hinzugefügt oder entfernt wird, müssen die effektiven Bandbreiten aller existierenden Verbindungen erneut berechnet und für jede Klasse aufsummiert werden, um den Wert $C_{VBR,k}$ zu erhalten. Dieses Verfahren muß als iteratives Verfahren durchgeführt werden, bis die Variablen $C_{VBR,k}$ gegen ihre exakten Werte konvergieren. In der Praxis ist es jedoch ausreichend, nur ein paar Iterationsschritte auszuführen. Eine Aktualisierung der Daten ist auch erforderlich, wenn eine CBR-Verbindung anstelle einer VBR-Verbindung aufgebaut wird.

Wenn eine Verbindung mit den Parametern $m_{rem}$ und $h_{rem}$ beendet wird, wird ein Verfahren durchgeführt, das dem oben Beschriebenen ähnlich ist. Die effektive Bandbreite für die beendete Verbindung wird berechnet und von $C_{VBR,krem}$ für die betreffende Klasse subtrahiert. $M_{VBR,krem}$ wird um $m_{rem}$ reduziert. Anschließend wird eine Aktualisierung aller $C_{VBR,k}$-Variablen in derselben Weise wie für den Aufbau einer Verbindung aktualisiert.

Da mit der Lindberger-Formel die effektive Bandbreite sehr schnell berechnet werden kann, sind die Aktualisierungen für eine angemessene Anzahl von Verbindungen nicht zu zeitaufwendig. Dennoch muß ein Kompromiß zwischen Rechenkapazität und Genauigkeit der Bandbreitenberechnung gefunden werden. Es kann gerechtfertigt sein, Aktualisierungen nicht vorzunehmen, wenn die Zusammensetzung der existierenden Verbindungen seit der letzten Aktualisierung nicht zu stark variiert worden ist.

Es kann ausreichend sein, die Aktualisierungsberechnungen nicht bei jeder verbindungsänderung sondern in regelmäßigen Zeitabständen vorzunehmen, die sich aus einem Zeitablauf (z.B. alle 30 s) oder ereignisgesteuert (beispielsweise nach jeweils 10 verbindungsherstellungen oder -beendungen) ergeben können.

**Patentansprüche**

1. Verfahren zur Herstellung einer Kommunikationsverbindung zur Übertragung digitaler Signale in einem Kommunikationsnetz, bei dem von einem Netzknoten mit einem Übertragungswunsch Verkehrsparameter, einschließlich der mittleren Bitrate (m) und der Spitzenbitrate (h), übermittelt werden und von einem anderen Netzknoten anhand der übermittelten Parameter eine Annahmeprüfung dahingehend vorgenommen wird, ob im Hinblick auf die eigene Übertragungskapazität die Verbindung mit einer hohen Wahrscheinlichkeit für eine verlustfreie Übertragung aller Informationen hergestellt werden kann, wobei

   - in der Empfangsstation für die Annahmeprüfung eines Ubertragungswunsches eine Klassifizierung des Übertragungsverkehrs der Empfangsstation bezüglich vorgegebener Kombinationen der Parameter "mittlere Bitrate" (m) und "Spitzenbitrate" (h) in Regionen vorgenommen wird,
   - für die Annahmeprüfung innerhalb einer Region eine effektive Bandbreite durch Anwendung eines Algorithmus für ein statistisches Multiplexen bei homogenem Verkehr unter Berücksichtigung einer reduzierten Übertragungskapazität zugrunde gelegt wird und
   - die so für die gebildeten Region als benötigt ermittelten effektiven Bandbreiten additiv ohne statistisches Multiplexen berücksichtigt werden.

2. Verfahren nach Anspruch 1, **dadurch gekennzeichnet, daß** Verbindungen mit konstanter Bitrate, CBR, einer eigenen Region zugeordnet werden, die in gleicher Weise wie die anderen gebildeten Regionen behandelt wird.

3. Verfahren nach Anspruch 1 oder 2, **dadurch gekennzeichnet, daß** die Klassifizierung mit Parameterkombinationen "mittlere Bitrate" (m) und "Verhältnis Spitzenbitrate zu mittlerer Bitrate" (h/m) vorgenomen wird.

4. Gerät zum Empfang einer Mehrzahl digitaler Signale, für die zur Herstellung der Verbindung zunächst ein Übertragungswunsch und Verkehrsparameter, einschließlich der mittleren Bitrate (m) und der Spitzenbitrate (h) übermittelt werden, mit einer Einrichtung zur Durchführung einer Annahmeprüfung durch Vergleich der eigenen Empfangskapazität mit den durch bestehende Verbindungen zuzüglich des Übertragungswunsches beanspruchten Bandbreite, wobei

- in der Einrichtung zur Durchführung der Annahmeprüfung eine Klassifizierung des Übertragungsverkehrs bezüglich vorgegebener Kombinationen der Parameter "mittlere Bitrate" (m) und "Spitzenbitrate" (h) in Regionen vorgenommen wird,
- für die Annahmeprüfung innerhalb einer Region eine gegenüber der maximalen Bandbreite verringerte effektive Bandbreite durch Anwendung eines Algorithmus für ein statistisches Multiplexen bei homogenem Verkehr unter Berücksichtigung einer reduzierten Übertragungskapazität zugrunde gelegt wird und
- die so für die gebildeten Region als benötigt ermittelten effektiven Bandbreiten additiv ohne statistisches Multiplexen berücksichtigt werden.

5. Gerät nach Anspruch 4, **dadurch gekennzeichnet, daß** in der Einrichtung zur Durchführung der Annahmeprüfung Verbindungen mit konstanter Bitrate, CBR, einer eigenen Region zugeordnet werden.

6. Gerät nach Anspruch 4 oder 5, **dadurch gekennzeichnet, daß** in der Einrichtung zur Durchführung der Annahmeprüfung die Klassifizierung mit Parameterkombinationen "mittlere Bitrate" (m) und "Verhältnis Spitzenbitrate zu mittlerer Bitrate" (h/m) vorgenomen wird.

**Claims**

1. Method for setting up a communication link for transmitting digital signals in a communication network, in which a network node uses a transmission request to transmit traffic parameters, including the average bit rate (m) and the peak bit rate (h), and another network node uses the transmitted parameters to perform an acceptance check to determine whether its own transmission capacity allows the connection to be set up with a high level of probability of loss-free transmission of all the information, where
   the receiving station, for the acceptance check for a transmission request, classifies the transmission traffic of the receiving station with respect to prescribed combinations of the parameters "average bit rate" (m) and "peak bit rate" (h) in regions,
   the acceptance check within a region is based on an effective bandwidth by applying an algorithm for statistical multiplexing for homogeneous traffic taking into account a reduced transmission capacity, and
   the effective bandwidths which are thus ascertained as being needed for the regions formed are taken into account additively without statistical multiplexing.

2. Method according to Claim 1, **characterized in that** connections with a constant bit rate, CBR, are allocated to a separate region which is handled in the same way as the other regions formed.

3. Method according to Claim 1 or 2, **characterized in that** the classification is performed using parameter combinations "average bit rate" (m) and "ratio of peak bit rate to average bit rate" (h/m).

4. Appliance for receiving a plurality of digital signals for which the connection is set up by first transmitting a transmission request and traffic parameters, including the average bit rate (m) and the peak bit rate (h), having a device for performing an acceptance check by comparing its own reception capacity with the bandwidth taken up by existing connections plus the transmission request, where
   the device for performing the acceptance check classifies the transmission traffic with respect to prescribed combinations of the parameters "average bit rate" (m) and "peak bit rate" (h) in regions,
   the acceptance check within a region is based on an effective bandwidth, which is reduced in comparison with the maximum bandwidth, by applying an algorithm for statistical multiplexing for homogeneous traffic taking into account a reduced transmission capacity, and
   the effective bandwidths which are thus ascertained as being needed for the regions formed are taken into account additively without statistical multiplexing.

5. Appliance according to Claim 4, **characterized in that** the device for performing the acceptance check allocates connections with a constant bit rate, CBR, to a separate region.

6. Appliance according to Claim 4 or 5, **characterized in that** the device for performing the acceptance check performs the classification using parameter combinations "average bit rate" (m) and "ratio of peak bit rate to average bit rate" (h/m).

**Revendications**

1. Procédé d'établissement d'une liaison de communication pour la transmission de signaux numériques dans un réseau de communication, dans lequel on transmet par un noeud du réseau ayant un souhait de transmission des paramètres de trafic, y compris le ou les débits binaires (m) moyens et le ou les débits binaires (h) de pointe, et on effectue par un autre noeud du réseau au moyen des paramètres transmis un contrôle d'acceptation sur le point de savoir si au vu de la capacité propre de transmission on peut établir la liaison avec une grande probabilité pour une transmission sans perte de toutes les informations, dans lequel on effectue dans le poste de réception pour le contrôle d'acceptation d'un souhait de transmission un classement du trafic de transmission du poste de réception pour ce qui concerne des combinaisons données à l'avance des paramètres "taux binaire (m) moyen" et "taux binaire (h) de pointe" dans des régions, on prend pour base, pour le contrôle d'acceptation, une largeur de bande effective par utilisation d'un algorithme pour un multiplexage statistique, dans un trafic homogène, en tenant compte d'une capacité réduite de transmission et on tient compte des largeurs de bande effectives ainsi déterminées dont on a besoin pour les régions formées, additivement, sans multiplexage statistique.

2. Procédé suivant la revendication 1, **caractérisé en ce que** l'on associe des communications à débit binaire, CBR, constant, à une région propre que l'on traite de la même façon que les autres régions formées.

3. Procédé suivant la revendication 1 ou 2, **caractérisé en ce que** l'on effectue la classification avec des combinaisons de paramètres "taux binaire (M) moyen" et "rapport de taux binaire de pointe et taux binaire moyen (h/m)".

4. Appareil de réception d'une multiplicité de signaux numériques pour lesquels il est transmis, pour l'établissement de la liaison, d'abord un souhait de transmission et des paramètres de trafic, y compris le débit binaire (m) moyen et le débit binaire (h) de pointe, comprenant un dispositif pour effectuer un contrôle d'acceptation par comparaison de la capacité propre de réception aux largeurs de bande revendiquées par les liaisons existantes en plus du souhait de transmission, dans lequel il est effectué, dans le dispositif pour effectuer le contrôle d'acceptation, un classement du trafic de transmission en ce qui concerne les combinaisons données à l'avance des paramètres "débit binaire (m) moyen" et "débit binaire (h) de pointe" dans des régions pour lesquelles il y a à la base du contrôle d'acceptation une largeur de bande effective diminuée par rapport à la largeur de bande maximum à l'intérieur d'une région par utilisation d'un algorithme pour un multiplexage statistique dans un trafic homogène en tenant compte d'une capacité de transmission réduite et les largeurs de bande effectives déterminées ainsi, qui sont nécessaires pour les régions formées, sont prises en compte additivement sans multiplexage statistique.

5. Appareil suivant la revendication 4, **caractérisé en ce que**, dans le dispositif pour effectuer le contrôle d'acceptation, des liaisons à taux binaire, CBR, constantes, sont associées à une région propre.

6. Appareil suivant la revendication 4 ou 5, **caractérisé en ce que**, dans le dispositif pour effectuer le contrôle d'acceptation, est effectuée la classification avec des combinaisons de paramètres "taux binaire (M) moyen" et "rapport de taux binaire de pointe et taux binaire moyen (h/m)".